# EUROPÄISCHE PATENTANMELDUNG

(11) **EP 2 093 720 A2**
(43) Veröffentlichungstag der Anmeldung: **26.08.2009**
(21) Anmeldenummer: 09161226.7
(22) Anmeldetag: 06.03.1999
(51) Int. Cl.: G07F 7/10, G06K 7/00

(54) **Terminal für Chipkarten**

(30) Priorität: 13.03.1998 DE 29804510 U
(62) Teilanmeldung aus: 99919062.2
(71) Anmelder: Celo Communications R & D Ltd., Dublin 2 (IE)
(72) Erfinder: Deutschmann, Ingo, 06237 Leuna (DE)
(74) Vertreter: HOFFMANN EITLE

(57) **Zusammenfassung**

Chipkartenterminal (1) für Chipkarten, wobei das Chipkartenterminal (1) eine Kontakteinrichtung (2) für Chipkarten (3), eine Schnittstelle (6) zu einer EDVA (7) und eine integrierte Tastatureinheit (5) beinhaltet, sowie eine Torschaltung (4), die zwischen der Kontakteinrichtung (2), der Schnittstelle (6) und der Tastatureinheit (5) geschaltet ist, und ausgebildet ist Identifikationsinformation, die über die Tastatureinheit eingegeben wird, direkt zu empfangen und die Identifikationsinformation anschließend an eine Chipkarte zu senden, ansprechend auf ein Signal aus der EDVA.

## Beschreibung

Die Erfindung bezeichnet ein Terminal für Chipkarten, welche als Mikroprozessorkarten ausgeführt sind, vorzugsweise zum Eingeben der Identifikationsnummer über eine integrierte Tastatur in einen in dieser Mikroprozessorkarte befindlichen Mikrocontroller zur Authentifizierung des Nutzers dieser Mikroprozessorkarte.

Es sind aus der IPC (Internationale Patentklassifikation) G07 verschiedene Kontrollvorrichtungen bekannt. Im Zusammenhang mit Finanztransaktionen sind unter G07F 7/08 entsprechend codierte Identitätskarten eingruppiert. Chipkarten werden in immer größerem Maße im Consumerbereich, z.B. als sogenannte "Elektronische Geldbörse" oder zum elektronischen Signieren von Verträgen, eingesetzt. Dazu werden die Chipkarten in geeignete Chipkarten Lese-/Schreibeinheit eingeführt. Die dazu notwendige Steuerlogik ist in der Klasse G06F17/60 klassifiziert. Beispielsweise beschreibt die Druckschrift EP0668579A2 die Nutzung von Chipkarten (Smartcards) zur Geldübertragung.

Chipkarten können unter anderem mit einer Authentifizierung ausgestattet sein. Diese besteht darin, daß die sich die Person, die bestimmte Funktionen einer Chipkarte nutzen will, wie z.B. das Aufladen mit Geldbeträgen bei Geldkarten, oder das Signieren bei Signaturkarten, gegenüber der Chipkarte mit einer PIN (personal identity number) authentifizieren muß. Die Überprüfung der Berechtigung des Benutzers unter Verwendung digitaler Informationen wird in der H04L 9/32 eingruppiert. Dabei muß über eine Identifizierung sichergestellt werden, daß nur der Berechtigte, d.h. authentifizierte Nutzer diese Chipkarte benutzen kann. Dies geschieht üblicherweise durch die Eingabe einer Identifikation durch diesen Nutzer, bsw. durch die Eingabe einer PIN über eine Tastatur. Die Druckschrift EP0552392A1 beschreibt beispielsweise ein Verfahren zur gegenseitigen Authentifikation einer Chipkarte und eines Terminals. Damit soll insbesondere sichergestellt werden, daß die eingegebene Identifizierung sicher zur Chipkarte übertragen wird.

Diese PIN soll aber aus Sicherheitsgünden nicht auf einer mit dem Chipkartenterminal verbundenen EDVA (meist ein PC oder ein anderer Rechner), sondern auf einem im Chipkartenterminal integriertem Tastaturfeld eingegeben werden. Die Druckschrift DE4406602A1 offenbart beispielsweise zur Identifizierung und Authentifizierung von Kommunikationspartnern sicherheitstechnische Einrichtungen mit einer Tastatur zur Eingabe einer PIN, welche mit Chipkarten im Datenaustausch stehen.

Das physikalische Aussehen, sowie die Anzahl und Anordnung der Kontakte der weitverbreitetsten Chipkarten sind standardisiert (siehe ISO/IEC 7816-1,2). Weiterhin sind auch die elektronischen Signale und Übertragungsprotokolle standardisiert (ISO/IEC 7816-3). Außerdem sind teilweise auch die Kommandos zum Datenaustausch mit der Chipkarte (ISO/IEC 7816-4), insbesondere die Eingabe einer PIN zur Authentifizierung eines Nutzers gegenüber einer Chipkarte, standardisiert. In der Druckschrift EP 347894 wird ein typisches Chipkartenterminal beschrieben. Er besteht aus einer Tastatur, einem Mikroprozessor, einer Chipkarten Lese-/Schreibeinheit, einem Display, sowie einem Drucker. Dabei besteht die Aufgabe des Mikroprozessors unter anderem darin, die Eingabe der PIN auf der Tastatur des Chipkartenterminals zu ermöglichen, diese Eingabe zu verarbeiten und an die Chipkarte weiterzugeben, sowie die Realisierung des Chipkartenprotokolls nach ISO/IEC 7816-3.

Da die Preise für Chipkarten minimal sind, besteht das größte Hemmnis deren Verbreitung in den Herstellungskosten des Chipkartenterminals. Dies ist dadurch gegeben, daß zur Herstellung von herkömmlichen Chipkartenterminals teure Bauelemente, insbesondere Mikroprozessoren, verwendet werden. Wie in der einschlägigen Fachpresse gezeigt (CT 12/94), kann man auch ein Chipkartenterminal ohne Mikroprozessor bauen, indem man die parallele Schnittstelle eines Personalcomputers nutzt. Ähnliche Vorschläge sind auch für die serielle Schnittstelle bekannt (Markus Kuhn 1996). Neben der Steuerung des Chipkartenprotokolls durch die EDVA liegt ein wesentlicher Unterschied zu einem herkömmlichen Chipkartenterminal mit Mikroprozessor dann in der Behandlung der PIN, welche in die EDVA (Personalcomputer) eingegeben wird. Damit ist der Nachteil verbunden, daß diese dort bereits unerlaubt gelesen oder modifiziert werden kann und somit nicht mehr hinreichend sicher ist.

Um die oben genannten Kosten eines herkömmlichen Chipkartenterminals zu verringern und trotzdem eine sichere Eingabe der PIN über ein im Chipkartenterminal integriertem Tastaturfeld zu gewährleisten, ist es Aufgabe der Erfindung, ein Chipkartenterminal zu entwickeln, welches ohne Verwendung eines Mikroprozessors die PIN abfragt und direkt an die Chipkarte weitergibt, wodurch diese gegen Erkundung und Modifikation geschützt ist.

Die Aufgabe wird durch die im Patentanspruch 1 aufgeführten Merkmale gelöst. Bevorzugte Weiterbildungen ergeben sich aus den Unteransprüchen.

Das Wesen der Erfindung liegt in der Verwendung einer Torschaltung innerhalb eines einfachen Chipkartenterminals, welche zwischen der Schnittstelle zu einer EDVA und dem I/O Kontakt der Chipkarte angeordnet ist und von der EDVA gesteuert, die an der integrierten Tastatur eingegebene digitale Identifikationsinformation in das Chipkartenprotokoll einfügt.

Die Vorteile der Erfindung liegen in der durch die Torschaltung bedingten einfachen notwendigen Logik zur hinreichend sicheren Einfügung der Identifizierungsinformation in die Chipkarte. Dadurch vereinfacht sich der Aufbau eines Chipkartenterminals wesentlich, wobei insbesondere durch Verzicht auf einen Mikroprozessor kostengünstigere Bausteine eingesetzt werden können. Da das Chipkartenprotokoll selbst in der EDVA generiert wird, ist diesbezüglich eine hohe Flexibilität gegeben.

In den Weiterbildungen der Erfindung ergeben sich weitere Vereinfachungen der Logik durch spezifische Anpassungen an die serielle bzw. die parallele Schnittstelle eines PC's. Die weitgehende Integration aller erforderlichen Komponenten eines Chipkartenterminals in einen Logikbaustein gestattet eine sehr preiswerte Fertigung dieser, wodurch die Verbreitung der Chipkarte wesentlich unterstützt wird. Ebenfalls vorteilhaft ist die Integration dieses Bausteins in die Tastatur der EDVA selbst.

Die Erfindung wird als Ausführungsbeispiel an Hand von
Fig. 1 als Prinzipaufbau des Chipkartenterminals
Fig. 2 als Prinzipaufbau der Torschaltung näher erläutert.

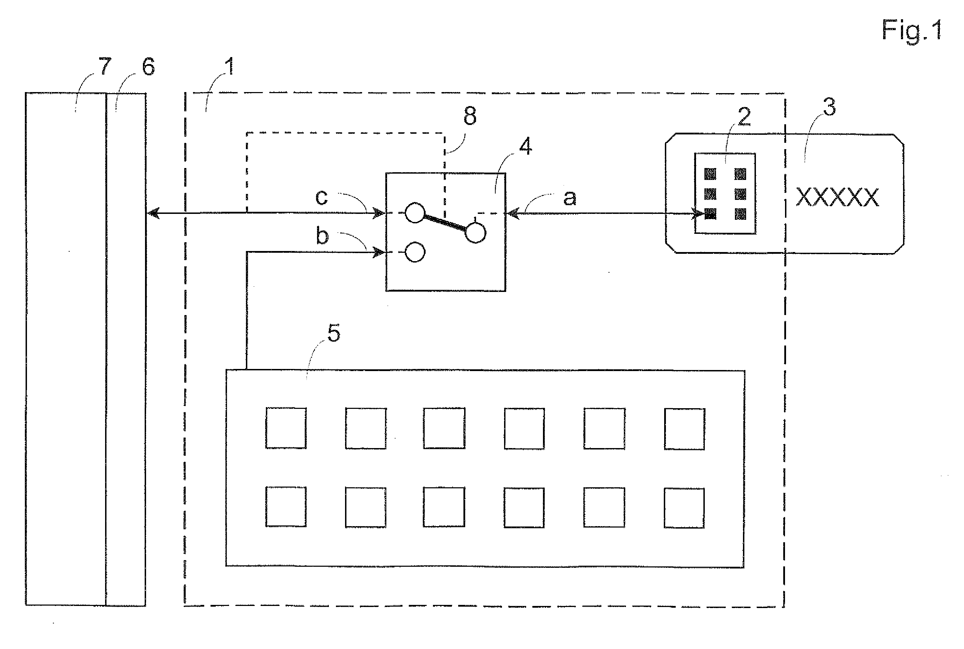

Nach Figur 1 besteht ein Chipkartenterminal 1 aus einer Kontakteinrichtung 2 für Chipkarten 3, welche mit einer Torschaltung 4 mittels eines Datenpfades a verbunden ist, einer integrierten Tastatureinheit 5, welche mit der Torschaltung 4 mittels eines Datenpfades b verbunden ist, einem Datenpfad c, welcher die Torschaltung 4 und eine Schnittstelle 6 einer EDVA 7 verbindet und eine von der ED-VA 7 über den Datenpfad c kontrollierte Steuerung 8 der Torschaltung 4.

Die Funktionsweise des Chipkartenterminals 1 besteht darin, daß der eigentliche Datenverkehr über die Datenpfade a und c entsprechend dem Chipkartenprotokoll zwischen der Chipkarte 3 und der EDVA 7 durchgeführt wird, wobei dieser von der EDVA 7 generiert wird. Die integrierte Tastatureinheit 5 stellt über die Eingabe des Nutzers die erforderliche digitale Identifizierungsinformation, bsw. eine PIN sowie optional deren Prüfsumme, bereit, mit der die Chipkarte 3 den Nutzer als berechtigt authentisieren kann. Die EDVA 7 generiert entsprechend dem Chipkartenprotokoll den Datenverkehr zur Chipkarte 3 über den Datenpfad c und gibt zusätzlich über den Datenpfad c den Befehl, welcher die Steuerung 8 der Torschaltung 4 bewirkt, zum Einfügen der Identifizierungsinformation vom Datenpfad b in den resultierenden Datenpfad a.

Das Chipkartenterminal 1 stellt alle zum Betrieb des Mikroprozessors der Chipkarte 3 erforderlichen Quellen (Stromversorgung, Takt, etc.) über die Kontakteinrichtung bereit. Es ist optional möglich, die Torschaltung 4 mit einer FIFO-Funktion (first in first out memory) auszuführen. Der Datenpfad c ist ein- oder mehradrig ausgeführt und bietet die Möglichkeit zum bidirektionalen Datenaustausch. Er ist vorzugsweise mit der standardisierten parallelen bzw. in einer anderen Ausführung mit der seriellen Schnittstelle der EDVA 6 in der speziellen Ausführung eines PC's verbunden. Die Steuerung 8 der Torschaltung 4 erfolgt über eine spezielle Steuerleitung innerhalb des Datenpfades c oder durch geeignete Filterung der Daten auf diesem Datenpfad c. Es ist vorteilhaft möglich, alle im Chipkartenterminal erforderlichen logischen Komponenten (Torschaltung 4, Tastaturlogik und Speicher, Takterzeugung für die Chipkarte usw.) in einem geeigneten Logikschaltkreis, bsw. einen FPGA (free programmable gate array), zu integrieren. Ebenso ist es möglich, das Chipkartenterminal 1 in die Tastatur der EDVA 7 unter Nutzung dieser und der Tastaturschnittstelle zu integrieren.

Die Funktionsweise des Chipkartenterminals 1 besteht darin, daß der eigentliche Datenverkehr entsprechend dem Chipkartenprotokoll zwischen der Chipkarte 3 und der EDVA 7 durchgeführt wird, wobei dieser von der EDVA 7 gesteuert wird.

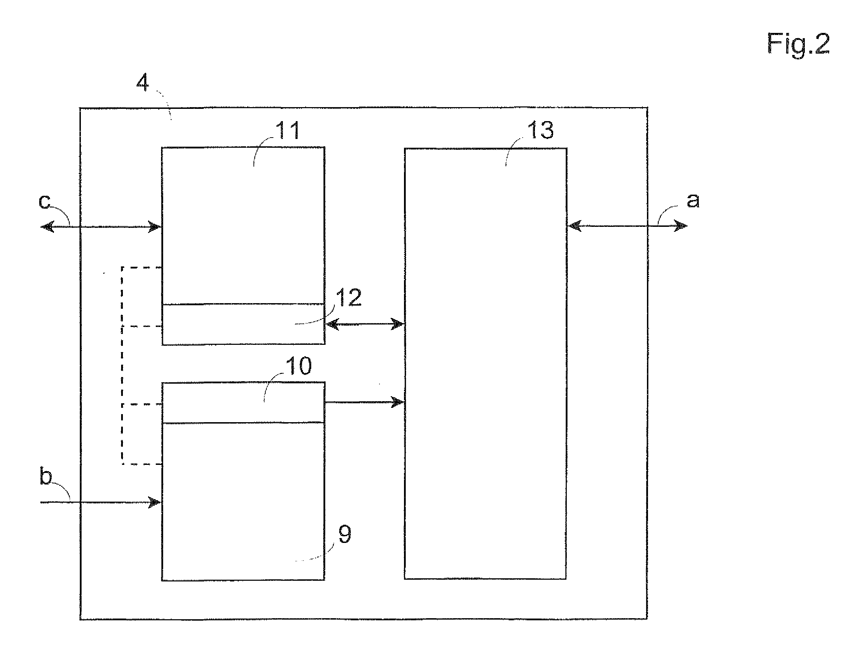

Nach Fig. 2 kann die Torschaltung 4 im einzelnen aus einem mit dem Datenpfad b verbunden Tastaturdekoder 9, der mit einem Identifizierungsinformationsspeicher 10 verbunden ist, aus einer mit dem Datenpfad c verbunden Steuerlogik 11 mit Steuerregister 12, welche intern mit dem Tastaturdekoder 9 und/oder dem Identifizierungsinformationspeicher 10 verbunden ist, und einem als Tor dienendem seinerseits mit dem Datenpfad a verbundenen Befehlsspeicher 13 bestehen. Der Befehlsspeicher 13 ist optional mit einer FIFO-Funktion ausgeführt.

Durch die Verbindung des Tastaturdekoders 9 mit der Steuerlogik 11 ist es möglich, spezielle Eingaben des Benutzers wie die Tasten "*" und '#' an die Steuerlogik 11 zu melden. Durch die Verbindung des Identifizierungsinformationspeicher 10 mit der Steuerlogik 11 ist es weiterhin möglich, die Anzahl der eingegebenen Stellen der Identifizierungsinformation durch die Steuerlogik 11 abzufragen. Diese legt dann diese Informationen in dem Steuerregister 12 ab, welches von der EDVA über den Datenpfad c abgefragt werden kann.

Weiterhin enthält das Steuerregister 12 die Chipkartenkommunikationsparameter nach ISO/IEC 7816 3, welche von der EDVA aus eingestellt werden können.

Die Steuerlogik 11 gewährleistet verschiedene Übertragungsszenarios.

### I. Transparentmodus

In diesem Modus empfängt die EDVA Daten von der Chipkarte oder kann Daten an die Chipkarte senden. Dabei werden die Befehle einfach durch das Befehlsregister 12 durchgereicht.

### II. Identifizierungsinformationspeicher 10 füllen

Dabei empfängt der Identifizierungsinformationspeicher 10 über den Tastaturdecoder 9 von der Tastatureinheit die vom Nutzer eingegebene Identifizierungsinformation. Diese wird im Identifizierungsinformationspeicher 10 zur weiteren Verwendung zwischengespeichert. Ein Endekennzeichen kann auf einer speziellen Taste der Tastatureinheit durch den Benutzer eingegeben werden. Dieses Endekennzeichen wird der Steuerlogik 11 gemeldet, welche im Steuerregister 12 die Information hinterlegt, daß eine Identifizierungsinformation eingegeben wurde. Außerdem kann seitens der EDVA auch die Anzahl der Stellen der Identifizierungsinformation von der Steuerlogik 11 abgefragt werden, um z.B. eine zu kurze Eingabe zu erkennen, und den Nutzer zu einer neuen Eingabe aufzufordern.

### III. Identifizierungsinformationspeicher 10 löschen

Die EDVA sendet das Kommando "Identifizierungsinformation löschen" an die Steuerlogik 11, worauf diese den Identifizierungsinformationspeicher 10 zurücksetzt. Dies ist z.B. von Vorteil, falls der Nutzer eine Fehleingabe tätigte. Der Identifizierungsinformationspeicher 10 kann weiterhin auch durch eine Spezialtaste auf der Tastatureinheit gelöscht werden.

### IV. Steuerregister 12 setzen

Die EDVA sendet das Kommando "SetFlag" an die Steuerlogik 11, worauf die Steuerlogik 11 das Steuerregister 12 mit den mitgesendeten Werten füllt. Dabei werden folgende Werte übertragen: CRC und Parität. Diese werden dann beim Senden des "Verify" Kommandos als Einstellungen für das Protokoll genutzt.

### V. Status holen

Die EDVA sendet das Kommando "GetStatus" an die Steuerlogik 11, worauf diese als Rückgabewert die Statusinformationen des Steuerregisters 12 sendet (Anzahl der eingegebenen Stellen, aufgetretene Fehler).

### VI Ausgabemodus

Wenn von der Chipkarte eine Authentifizierung des Nutzers (wie z.B. in ISO/IEC 7816 4 Absatz 6.12 dargestellt) für einen bestimmten Befehl nötig ist, wird die Torschaltung durch den Befehl "SetAusgabe", welcher durch den EDVA gesendet wird, in den Ausgabemodus geschaltet. Das heißt, daß die EDVA zuerst die Steuerlogik 11 über den folgenden "Verify" Befehl informiert. Der Befehl "SetAusgabe" enthält außerdem die Information darüber, ab welcher Stelle des Befehles die Identifikationsinformation des Identifikationsinformationsspeichers 10 einzublenden ist. Anschließend sendet die EDVA den vollständigen "Verify" Befehl (nach ISO/IEC 7816-4 Seite 26 ff). Wenn dieser durch das Befehlsregister 13 getaktet wird, wird vom Steuerregister 12 veranlaßt, daß die Identifikationsinformation vom Identifikationsinformationsspeichers 10 in den Befehlsstrom des Datenpfades a eingebracht wird. Dabei ist es möglich, daß abhängig vom Steuerregister 11 weitere Bytes an den "Verify" Befehl angehängt oder ausgetauscht werden. Dies ist z.B. nötig um etwaige CRC Bytes anzuhängen, sowie die Parität einzustellen. Es ist weiterhin möglich, daß die Steuerlogik 11 auf das Auftreten einer (vorher in der Steuerlogik 11 festzulegenden) Befehlssequenz der EDVA automatisch das Einfügen der Identifikationsinformation ab der (ebenfalls vorher festzulegenden) Stelle der Befehlssequenz vornimmt. Dadurch entfällt das ansonsten notwendige explizite Umschalten in den Ausgabemodus VI durch die EDVA.

### Verwendete Bezugszeichen

- 1: Chipkartenterminal
- 2: Kontakteinrichtung
- 3: Chipkarten
- 4: Torschaltung
- 5: Tastatureinheit
- 6: Schnittstelle
- 7: EDVA
- 8: Steuerung
- 9: Tastaturdekoder
- 10: Identifizierungsinformationsspeicher
- 11: Steuerlogik
- 12: Steuerregister
- 13: Befehlsspeicher
- a: Datenpfad zu Chipkarte
- b: Datenpfad zu Tastatureinheit
- c: Datenpfad zur EDVA

1. Terminal für Chipkarten, welche einen Mikrocontroller beinhalten, wobei ein Chipkartenterminal (1) eine Kontakteinrichtung (2) für Chipkarten (3) und eine integrierte Tastatureinheit (5) beinhaltet und mit der Schnittstelle (6) einer EDVA (7) über einen Datenpfad (c), welcher einen bidirektionalen Datenaustausch ermöglicht, verbunden ist,
   **dadurch gekennzeichnet,**
   **daß** das Chipkartenterminal (1) eine über die Steuerung (8) kontrollierte Torschaltung (4) beinhaltet, welche mit der Chipkarte (3) über die Kontakteinrichtung (2) mittels eines Datenpfades (a) verbunden ist, mit der integrierten Tastatureinheit (5) mittels eines Datenpfades (b) verbunden ist, sowie mit der Schnittstelle (6) einer EDVA (7) mittels dem Datenpfad (c) verbunden ist und
   daß die EDVA (7) den Datenverkehr zur Chipkarte (3) über den Datenpfad (c) generiert und zusätzlich über den Datenpfad (c) den Befehl zum Einfügen der Identifizierungsinformation vom Datenpfad (b) in den resultierenden Datenpfad (a) gibt, welcher die Steuerung (8) der Torschaltung (4) bewirkt.
2. Terminal für Chipkarten nach Beispiel 1
   **dadurch gekennzeichnet,**
   **daß** die Torschaltung (4) zur Kommunikation über den Datenpfad (c) speziell für eine standardisierte serielle Schnittstelle, eine standardisierte parallele Schnittstelle oder eine standardisierte Tastaturschnittstelle ausgeführt ist.
3. Terminal für Chipkarten nach Beispiel 1 oder 2
   **dadurch gekennzeichnet,**
   **daß** die Torschaltung (4) mit weiteren zum Betrieb des Chipkartenterminals (1) erforderlichen logischen Komponenten in einem Logikschaltkreis integriert ist.
4. Terminal für Chipkarten nach einem der Beispiele 1 bis 3
   **dadurch gekennzeichnet,**
   **daß** das Chipkartenterminal (1) in die Tastatur der EDVA (7) integriert ist, deren integrierte Tastatureinheit (5) über den Datenpfad (b) mit der Torschaltung (4) verbunden ist, welche über den Datenpfad (c) mit der Schnittstelle (6) in Form der Tastaturschnittstelle verbunden ist.
5. Terminal für Chipkarten nach einem der Beispiele 1 bis 4
   **dadurch gekennzeichnet,**
   **daß** die Torschaltung (4) im einzelnen aus einem mit dem Datenpfad (b) verbunden Tastaturdekoder (9), der mit einem Identifizierungsinformationsspeicher (10) verbunden ist, aus einer mit dem Datenpfad (c) verbunden Steuerlogik (11) mit Steuerregister (12), welche intern mit dem Tastaturdekoder (9) und/oder dem Identifizierungsinformationspeicher (10) und einem als Tor dienendem seinerseits mit dem Datenpfad (a) verbundenen Befehlsspeicher (13) verbunden ist, wobei der Befehlsspeicher (13) optional mit einer FIFO-Funktion ausgeführt ist.

## Patentansprüche

1. Chipkartenterminal (1) für Chipkarten, wobei das Chipkartenterminal (1) eine Kontakteinrichtung (2) für Chipkarten (3), eine Schnittstelle (6) zu einer EDVA (7) und eine integrierte Tastatureinheit (5) beinhaltet, sowie eine Torschaltung (4), die zwischen der Kontakteinrichtung (2), der Schnittstelle (6) und der Tastatureinheit (5) geschaltet ist, und ausgebildet ist Identifikationsinformation, die über die Tastatureinheit eingegeben wird, direkt zu empfangen und die Identifikationsinformation anschließend an eine Chipkarte zu senden, ansprechend auf ein Signal aus der EDVA.

2. Chipkartenterminal nach Anspruch 1, **dadurch gekennzeichnet, dass** die Torschaltung (4) ausgebildet ist auf eine Befehlssequenz der EDVA hin automatisch die Identifikationsinformation in die Befehlssequenz einzufügen.

3. Chipkartenterminal nach Anspruch 1, **dadurch gekennzeichnet, dass** die Torschaltung (4) ausgebildet ist, um über die Schnittstelle (6) eine von der EDVA (7) generierte Befehlsequenz zur Chipkarte (3) und zusätzlich einen Steuerungsbefehl zu empfangen, welcher die Steuerung (8) der Torschaltung (4) bewirkt, zum Einfügen der Identifikationsinformation in einen resultierenden Befehlsstrom zur Kontakteinrichtung (2).

4. Chipkartenterminal nach Anspruch 3, **dadurch gekennzeichnet, dass** der Steuerungsbefehl Information darüber enthält, an welcher Stelle die Identifikationsinformation einzublenden ist.

5. Chipkartenterminal nach einem der Ansprüche 1 bis 4, **dadurch gekennzeichnet,**
**dass** die Torschaltung (4) zur Kommunikation mit der EDVA speziell für eine standardisierte serielle Schnittstelle, eine standardisierte parallele Schnittstelle oder eine standardisierte Tastaturschnittstelle ausgeführt ist.

6. Chipkartenterminal nach einem der Ansprüche 1 bis 5, **dadurch gekennzeichnet,**
**dass** die Torschaltung (4) mit weiteren zum Betrieb des Chipkartenterminals (1) erforderlichen logischen Komponenten in einem Logikschaltkreis integriert ist.

7. Chipkartenterminal nach einem der Ansprüche 1 bis 6, **dadurch gekennzeichnet,**
**dass** das Chipkartenterminal (1) in die Tastatur der EDVA (7) integriert ist, deren integrierte Tastatureinheit (5) mit der Torschaltung (4) verbunden ist, welche mit der Schnittstelle (6) in Form der Tastaturschnittstelle verbunden ist.

8. Chipkartenterminal nach einem der Ansprüche 1 bis 7, **dadurch gekennzeichnet,**
**dass** die Torschaltung (4) im einzelnen aus einem mit der integrierten Tastatureinheit (5) verbundenen Tastaturdecoder (9), der mit einem Identifizierungsinformationsspeicher (10) verbunden ist, aus einer mit der Schnittstelle (6) verbundenen Steuerlogik (11) mit Steuerregister (12), welche intern mit dem Tastaturdecoder (9) und/oder dem Identifizierungsinformationsspeicher (10) und einem seinerseits mit der Kontakteinrichtung (2) verbundenen Befehlsspeicher (13) verbunden ist, wobei der Befehlsspeicher (13) optional mit einer FIFO-Funktion ausgeführt ist.
